# EUROPÄISCHE PATENTANMELDUNG

(11) **EP 1 083 085 A2**
(43) Veröffentlichungstag der Anmeldung: **14.03.2001**
(21) Anmeldenummer: 00115822.9
(22) Anmeldetag: 22.07.2000
(51) Int. Cl.: B60Q 1/04, F16B 5/00

(54) **Einstellbares Befestigungselement**

(30) Priorität: 11.09.1999 DE 19943535
(71) Anmelder: Dr.Ing. h.c.F. Porsche Aktiengesellschaft, 70435 Stuttgart (DE)
(72) Erfinder: Klünker, Ulrich, 71732 Tamm (DE); Hiesl, Gerald, 71083 Herrenberg-Oberjesingen (DE); Heimpel, Peter, 75233 Tiefenbronn (DE)

(57) **Zusammenfassung**

Die Erfindung betrifft ein einstellbares Befestigungselement (1), insbesondere für Scheinwerfer von Fahrzeugen, mit einem Gewindestift (2), auf dem ein erstes Schraubelement (3) und ein zweites Schraubelement (4) mit einander gegenüberstehenden Anlageflächen (5,6) angeordnet sind. Um eine einstellbare Befestigungseinrichtung zu schaffen, die von der dem zu befestigenden Gegenstand abgewandten Seite des Bleches oder einer anderen Halterung höher einstellbar ist, wird vorgeschlagen, am ersten Schraubelement (3) eine über seine Anlagefläche (5) hinausragende Handhabe anzuordnen. Das zweite Schraubelement (4) weist in seine Anlagefläche (6) eine korrespondierende Vertiefung (22) zur Aufnahme der Handhabe des ersten Schraubelementes (3) auf.

## Beschreibung

Die Erfindung betrifft ein einstellbares Befestigungselement, insbesondere für Scheinwerfer von Fahrzeugen, nach dem Oberbegriff des Patentanspruches 1.

Befestigungselementen fällt regelmäßig die Aufgabe zu, die zu befestigenden Teile relativ zueinander zu positionieren. Im vorliegenden Fall geht es darum, ein Bauelement wie z.B. ein Scheinwerfer an einem plattenförmigen Gegenstand wie beispielsweise einem Blech eines Fahrzeugaufbaus einstellbar zu befestigen. Ein allgemein bekanntes Befestigungselement besteht aus einem Gewindestift, der an dem zu befestigenden Gegenstand gehalten ist. Auf diesem Gewindestift sind zwei Muttern, ggf. mit Unterlegscheiben, angeordnet, wobei das Blech zwischen den Muttern aufgenommen ist. Die Einstellung des Befestigungselementes erfolgt durch Verdrehen der dem zu befestigenden Gegenstand zugewandten Mutter. Die Einstellung wird durch Anziehen der zweiten, dem zu befestigenden Gegenstand abgewandten Mutter gesichert.

Ausgehend von diesem Stand der Technik ist es Aufgabe der Erfindung, eine einstellbare Befestigungseinrichtung zu schaffen, die von der dem zu befestigenden Gegenstand abgewandten Seite des Bleches oder einer anderen Halterung höher einstellbar ist.

Diese Aufgabe wird erfindungsgemäß mit den Merkmalen des Patentanspruches 1 gelöst. Es wird vorgeschlagen, bei einem an sich bekannten Befestigungselement, das aus einem Gewindestift besteht, auf dem zwei Schraubelemente miteinander gegenüberstehenden Anlageflächen angeordnet sind, am ersten Schraubelement eine über seine Anlagefläche hinausragende Handhabe anzuordnen. Das erste Schraubelement ist hierbei vorzugsweise dem zu befestigenden Gegenstand zugewandt; die Handhabe befindet sich dann auf der dem zu befestigenden Gegenstand abgewandten Seite des Schraubelementes. Das zweite Schraubelement weist in seine Anlagefläche eine korrespondierende Vertiefung zur Aufnahme der Handhabe des ersten Schraubelementes auf. Mit einem derart ausgestalteten Befestigungselement ist es in vorteilhafter Weise möglich, die Einstellung des Befestigungselementes auch dann vorzunehmen, wenn die den zu befestigenden Gegenstands zugewandte Seite des Befestigungselementes nicht zugänglich ist. Da sich die am ersten Schraubelement vorgesehene Handhabe durch eine Befestigungsöffnung hindurch erstreckt, kann die Handhabe von der dem zu befestigenden Gegenstand abgewandten Seite her ergriffen werden und durch Verdrehen des ersten Schraubelementes eine Einstellung herbeigeführt werden.

Die Handhabe ist vorzugsweise als Mutter ausgeführt, die mit einem scheibenförmigen Grundelement, das gleichzeitig die Anlagefläche bildet, verbunden ist. Die Handhabe kann jedoch auch als Rändelung o.ä. ausgeführt sein.

Das zweite Schraubelement ist so ausgebildet, daß es in seine Anlagefläche eine korrespondierende Vertiefung zur Aufnahme der Handhabe des ersten Schraubelementes aufweist. Dies wird vorzugsweise dadurch erreicht, daß das zweite Schraubelement aus einem topfförmigen Grundelement besteht, mit dem eine Mutter - vorzugsweise drehbar - verbunden ist. Das topfförmige Grundelement stützt sich mit seinem Rand als Anlagefläche außenseits der Befestigungsöffnung ab und die Mutter wird auf Gewindestift festgezogen, um die Einstellung des Befestigungselementes zu sichern. Grundelement und Mutter müssen nicht miteinander verbunden sein, dies verbessert jedoch die Handhabbarkeit. Bei einer drehbaren Verbindung zwischen dem Grundelement und der Mutter wird verhindert, daß zwischen dem Grundelement und der Randbefestigungsöffnung eine Relativbewegung entsteht, die dort zu Beschädigungen führen kann. Statt dessen wird bei dieser Anordnung eine Relativbewegung nur zwischen Grundelement und der Mutter erzeugt.

Zur Verbindung der Mutter mit dem Grundelement wird vorgeschlagen, im Grundelement eine Öffnung vorzusehen, durch die ein ringförmiger Kragen der Mutter hindurchgesteckt wird. Anschließend wird dieser Kragen umgebördelt, so daß insgesamt eine drehbare, nur in axiale Richtung wirksame Verbindung zwischen Grundelement und Mutter geschaffen ist.

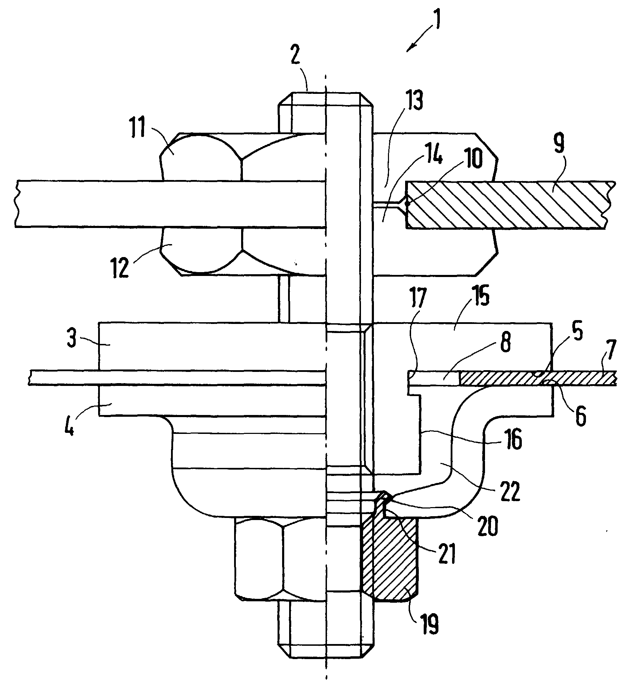

Die Erfindung ist nachstehend anhand des in der einzigen Figur dargestellten Ausführungsbeispieles näher erläutert.

Das in der einzigen Figur dargestellte Befestigungselement 1 besteht aus einem zentralen Gewindestift 2, auf dem zwei Schraubelemente 3 und 4 mit einander gegenüberstehenden Anlageflächen 5 und 6 gehalten sind. Zwischen den Anlageflächen 5, 6 ist ein Karosserieblech 7 aufgenommen, in das eine Befestigungsöffnung 8 eingebracht ist.

Das Befestigungselement 1 ist mit einer Wandung 9 einer Lagerschale für einen nicht näher gezeigten Scheinwerfer für ein Kraftfahrzeug verbunden. In die Wandung 9 ist eine zweite Befestigungsöffnung 10 eingebracht, durch die der Gewindestift 2 hindurchgeführt ist. Zur Verbindung des Befestigungselementes 1 mit der Wandung 9 sind auf dem Gewindestift 2 ein drittes und ein viertes Schraubelement 11, 12 angeordnet, zwischen denen die Wandung 9 aufgenommen ist. Die Schraubelemente 11, 12 sind an ihren der Wandung 9 abgewandten Stirnflächen eben ausgeführt, während an den der Wandung 9 zugewandten Stirnflächen zylindrische Ansätze 13, 14 vorgesehen sind. Der Außendurchmesser der Ansätze 13, 14 korrespondiert mit dem Innendurchmesser der zweiten Befestigungsöffnung 10, so daß das Befestigungselement 1 insgesamt ohne radiales Spiel in der zweiten Befestigungsöffnung 10 gehalten ist.

Das erste Schraubelement 3 besteht aus einem scheibenförmigen Grundelement 15, mit dem als Handhabe eine Mutter 16 verbunden ist. Im vorliegenden Beispiel sind das Grundelement 15 und die Mutter 16 einstückig ausgeführt. Der Außendurchmesser der Mutter 16 ist kleiner gewählt als der Innendurchmesser der ersten Befestigungsöffnung 8. Zwischen der Mutter 16 und dem Grundelement 15 ist zur Vergrößerung des radialen Einstellbereiches des Befestigungselementes 1 in der Befestigungsöffnung 8 eine umlaufende Nut 17 vorgesehen.

Das zweite Schraubelement 4 besteht aus einem topfförmigen Grundelement 18 mit einer Vertiefung 22, auf dem drehbar eine Mutter 19 gehalten ist. Zur Verbindung zwischen dem Grundelement 18 und der Mutter 19 ist an der Mutter 19 ein umlaufender Kragen 20 vorgesehen, der durch eine im Boden des Grundelementes 18 angeordnete zentrale Öffnung 21 hindurchgeführt ist. Der Kragen 20 ist umgebördelt, so daß das Grundelement 18 mit der Mutter 19 in axialer Richtung verbunden ist.

Zur Montage des Scheinwerfers wird das dritte und vierte Schraubelement 11, 12 an der Wandung 9 befestigt und das erste Schraubelement 3 auf den Gewindestift 2 aufgebracht. Die Mutter 16 des ersten Schraubelementes 3 wird durch die erste Befestigungsöffnung 8 hindurchgesteckt, bis die Anlagefläche 5 am Karosserieblech 7 anliegt. Durch Ergreifen der Mutter 16 mit einem Werkzeug oder mit der Hand und anschließendes Verdrehen wird die axiale Position des ersten Schraubelementes 5 auf dem Gewindestift 2 solange verändert, bis die Lagershale und damit der Scheinwerfer seine vorgeschriebene Position erreicht hat. Dann wird das zweite Schraubelement 4 auf den Gewindestift 2 aufgeschraubt, um die Einstellung des Befestigungselementes 1 zu sichern. Hier ist die Mutter 16 des ersten Schraubelementes 3 von der Vertiefung 22 des zweiten Schraubelementes 4 vollständig aufgenommen, ohne das topfförmige Grundelement 18 dabei zu berühren. Damit ist sichergestellt, daß die Position des ersten Schraubelementes 3 nicht mehr verändert wird.

Für den Fall einer Demontage ist des Scheinwerfers kann, wenn das zweite Schraubelement 4 nicht zugänglich sein sollte, zum Lösen des Scheinwerfers auch das dritte Schraubelement 11 gelöst werden. Eine Einstellung des Befestigungselementes ist dann bei der Wiedermontage des Scheinwerfers durch Verdrehen des vierten Schraubelementes 12 möglich. Sollte zusätzlich eine Einstellung radial zum Gewindestift 2 erforderlich sein, so werden das dritte und vierte Schraubelement 11, 12 umgedreht und so auf dem Gewindestift 2 aufgebracht, daß ihre ebenen Stirnflächen der Wandung 9 zugewandt sind. Da die zweite Befestigungsöffnung 10 nun nicht mehr durch die zylindrischen Ansätze 13, 14 ausgefüllt ist, kann das Befestigungselement 1 innerhalb der zweiten Befestigungsöffnung 10 radial verschoben werden.

## Patentansprüche

1. Einstellbares Befestigungselement (1) mit einem Gewindestift (2), auf dem ein erstes Schraubelement (3) und ein zweites Schraubelement (4) mit einander gegenüberstehenden Anlageflächen (5,6) angeordnet sind, **dadurch gekennzeichnet**, daß
- das erste Schraubelement (3) mit einer über seine Anlagefläche (5) hinausragenden Handhabe (16) versehen ist, und
- das zweite Schraubelement (4) in seiner Anlagefläche (6) eine korrespondierende Vertiefung (22) zur Aufnahme der Handhabe (16) aufweist.

2. Einstellbares Befestigungselement nach Anspruch 1, **dadurch gekennzeichnet**, daß das erste Schraubelement (3) aus einem scheibenförmigen Grundelement (15) besteht, mit dem als Handhabe eine Mutter (16) verbunden ist.

3. Einstellbares Befestigungselement nach Anspruch 1, **dadurch gekennzeichnet**, daß das zweite Schraubelement (4) aus einem topfförmigen Grundelement (18) besteht, das die Vertiefung (22) aufweist und mit dem eine Mutter (19) drehbar verbunden ist.

4. Einstellbares Befestigungselement nach Anspruch 3, **dadurch gekennzeichnet**, daß das topfförmigen Grundelement (18) und die Mutter (19) durch Bördeln miteinander verbunden sind.
